Europäisches Patentamt

European Patent Office

Office européen des brevets

(11) Numéro de publication : **0 664 410 A1**

# (12) DEMANDE DE BREVET EUROPEEN

(21) Numéro de dépôt : **95400073.3**

(22) Date de dépôt : **16.01.95**

(51) Int. Cl.⁶ : **F16C 39/06, F04D 19/04**

(30) Priorité : **19.01.94 FR 9400537**

(43) Date de publication de la demande :
**26.07.95 Bulletin 95/30**

(84) Etats contractants désignés :
**BE DE FR GB IT NL**

(71) Demandeur : **ALCATEL CIT**
**12 Rue de la Baume**
**F-75008 Paris (FR)**

(72) Inventeur : **Delamare, Jérôme, c/o Ins. N.**
**Polyt. de Grenoble**
**46, avenue Félix Viallet**
**F-38031 Grenoble Cédex (FR)**
Inventeur : **Yonnet, Jean-Paul, c/o Ins. N. Polyt.**
**de Grenoble**
**46, avenue Félix Viallet**
**F-38031 Grenoble Cédex (FR)**
Inventeur : **Rulliere, Elisabeth, c/o Ins.N. Polyt.**
**de Grenoble**
**46, avenue Félix Viallet**
**F-38031 Grenoble Cédex (FR)**

(74) Mandataire : **Gosse, Michel et al**
**SOSPI**
**14-16, rue de la Baume**
**F-75008 Paris (FR)**

(54) **Palier magnétique et ensemble comportant une partie statorique et une partie rotorique suspendue par un tel palier.**

(57) Le palier comporte une partie fixe (1) et une partie mobile (2), et comprend une butée magnétique passive comportant un élément fixe (17 à 20) lié à ladite partie fixe (1) et un élément mobile (21 à 24) lié à ladite partie mobile (2), caractérisé en ce qu'il comprend en outre un centreur magnétique passif coaxial à ladite butée passive (27 à 20 ; 21 à 24) et comportant un élément fixe (25, 26, 27) lié à la partie fixe (1) et un élément mobile (28) lié à la partie mobile (2), la butée passive (17 à 24) entourant extérieurement le centreur passif (25 à 28), la butée passive ayant une raideur axiale $k_{ab}$, une raideur radiale $k_{rb}$, un rayon moyen $R_{mb}$ et un rayon interne $R_{ib}$ et ledit centreur passif ayant une raideur axiale $k_{ac}$, une raideur radiale $k_{rc}$, un rayon moyen $R_{mc}$ et un rayon externe $R_{ec}$, un entrefer e séparant l'élément fixe et l'élément mobile de ladite butée et dudit centreur, ces différents paramètres étant choisis de façon à satisfaire simultanément les trois relations suivantes :

$$|k_{rc}| > |k_{rb}|$$

$$R_{mb} > R_{mc} \frac{|kac|}{|kab|}$$

et

$$R_{ib} - R_{ec} \geqq 3e.$$

FIG. 4

La présente invention concerne un palier magnétique permettant d'assurer la rotation d'un corps solide autour d'un axe fixe.

L'invention s'applique à la sustentation magnétique partielle ou totale de solides tournants, tels que volants d'inertie, disques, rotors de pompes turbomoléculaires, etc...

Celle-ci s'applique préférentiellement, bien que non exclusivement, aux mobiles rotoriques de grand diamètre par rapport à leur longueur axiale, c'est-à-dire à des rotors pour lesquels le rapport du moment d'inertie axial à son moment d'inertie transversal est plutôt supérieur à 1.

On sait que pour la sustentation d'un rotor, cinq degrés de liberté sont à contrôler ou à fixer.

En effet, si l'on considère le centre de gravité o du rotor, avec l'axe oz confondu avec l'axe de rotation et les axes ox et oy deux axes perpendiculaires situés dans le plan perpendiculaire en o à oz, ces cinq degrés de liberté, rapportés au centre de gravité o du rotor peuvent être définis comme suit :
- une translation axiale selon oz,
- deux translations radiales :
  l'une selon ox
  l'autre selon oy,
- deux rotations perpendiculaires : l'une $\theta_x$ autour de l'axe ox et l'autre $\theta_y$ autour de l'axe oy.

Dans les sustentations magnétiques, ces degrés de liberté sont contrôlés par plusieurs paliers magnétiques. Il existe des paliers magnétiques actifs et des paliers magnétiques passifs. Les premiers comprennent des électro-aimants qui créent des forces de rappel et sont associés à des détecteurs de position, un circuit d'asservissement commandant le courant des électro-aimants. Les paliers magnétiques passifs sont constitués uniquement d'aimants permanents et sont de deux types : a) un premier type dans lequel la partie mobile et la partie fixe sont constituées d'au moins un aimant permanent, b) un deuxième type, dit du type à réluctance variable, dans lequel seule l'une des deux parties, fixe ou mobile, porte un aimant permanent, et l'autre un simple circuit magnétique. Ce deuxième type fonctionne nécessairement en attraction, tandis que le premier type peut fonctionner en attraction ou en répulsion.

Les paliers magnétiques passifs sont évidemment beaucoup plus simples et moins coûteux.

Cependant, les paliers actifs permettent, par un choix correct de la fonction de transfert, l'amortissement des mouvements qu'ils contrôlent et en outre, il est nécessaire, d'après le théorème d'Earnshaw, que l'une au moins des trois translations, selon ox, oy ou oz du rotor, soit contrôlée de façon active.

Actuellement, trois solutions connues sont les suivantes :

1/ les cinq degrés de liberté sont contrôlés de manière active. Cette solution est complexe et onéreuse. Elle nécessite cinq canaux d'asservissement. Concrètement, il s'agit par exemple de deux paliers radiaux actifs, situés respectivement à chaque extrémité du rotor et qui contrôlent les translations selon les axes ox et oy ainsi que les rotations $\theta_x$ et $\theta_y$, et une butée axiale active qui contrôle les translations selon l'axe oz.

2/ Un degré de liberté est contrôlé de manière active : la translation suivant l'axe oz au moyen d'une butée axiale active et les quatre autres degrés de liberté sont contrôlés de manière passive au moyen de deux paliers passifs radiaux éloignés l'un de l'autre. On a ici un seul canal d'asservissement, mais l'exigence de deux paliers passifs radiaux éloignés axialement l'un de l'autre augmente l'encombrement.

3/ Deux degrés de liberté sont contrôlés de manière active : les translations selon les axes ox et oy au moyen d'un palier actif exigeant deux canaux d'asservissement et les trois autres degrés de liberté : la translation selon l'axe oz ainsi que les rotations $\theta_x$ et $\theta_y$ sont contrôlées par une butée axiale passive. Cette disposition, par rapport à la précédente, est intéressante car elle n'exige que deux paliers, et elle n'est pas encombrante puisqu'il n'y a qu'un seul palier radial. En revanche, il est ici nécessaire d'avoir deux canaux d'asservissement. Cette disposition est décrite dans le document de brevet FR-A-2 565 310.

Les paliers passifs connus sont de deux sortes :

1/ les paliers radiaux ou centreurs qui assurent la stabilité radiale selon les axes ox et oy, mais sont instables selon l'axe oz ainsi que vis-à-vis des rotations $\theta_x$ et $\theta_y$.

2/ Les butées axiales qui assurent la stabilisation selon l'axe oz et vis-à-vis des rotations $\theta_x$ et $\theta_y$, mais sont instables selon les translations ox et oy.

Dans toute la suite du texte, on appellera centreur magnétique passif un tel palier magnétique radial passif classique et connu, constitué par exemple de deux bagues aimantées, l'une liée à une partie fixe, et l'autre à une partie mobile, et de la même façon on appellera butée magnétique passive une telle butée magnétique axiale passive classique, connue et constituée par exemple de deux bagues aimantées, l'une liée à une partie fixe, et l'autre à une partie mobile.

La présente invention a pour but de proposer un palier magnétique radial passif constituant un centreur stable angulairement, c'est-à-dire assurant la stabilité de quatre degrés de liberté : selon les axes ox et oy, ainsi que vis-à-vis des rotations $\theta_x$ et $\theta_y$, contrairement aux centreurs connus.

Un tel palier permet de réaliser un dispositif pour la sustentation complète d'un corps solide en rotation autour d'un axe parfaitement fixé, d'une façon économique et très simplifiée.

L'invention a ainsi pour objet un palier magnétique permettant d'assurer la rotation d'un corps solide autour d'un axe fixe z, comportant une partie fixe, de révolution, et une partie mobile, de révolution, et comprenant une butée magnétique passive comportant un élément fixe lié à ladite partie fixe et un élément mobile lié à ladite partie mobile, caractérisé en ce qu'il comprend en outre un centreur magnétique passif coaxial à ladite butée passive et comportant un élément fixe lié à ladite partie fixe et un élément mobile lié à ladite partie mobile, ladite butée passive entourant extérieurement ledit centreur passif, ladite butée passive ayant une raideur axiale $k_{ab}$, une raideur radiale $k_{rb}$, un rayon moyen $R_{mb}$ et un rayon interne $R_{ib}$ et ledit centreur passif ayant une raideur axiale kac, une raideur radiale $k_{rc}$, un rayon moyen $R_{mc}$ et un rayon externe $R_{ec}$, un entrefer e séparant l'élément fixe et l'élément mobile de ladite butée et dudit centreur, ces différents paramètres étant choisis de façon à satisfaire simultanément les trois relations suivantes :

1/ $|k_{rc}| > |k_{rc}|$

2/ $R_{mb} > R_{mc} \sqrt{\dfrac{|kac|}{|kab|}}$

3) $R_{ib} - R_{ec} \geq 3e$

On va maintenant donner la description de quelques exemples de mise en oeuvre de l'invention en se référant au dessin annexé dans lequel :

La figure 1 représente un palier magnétique selon l'invention constituant un centreur stable angulairement vis-à-vis des rotations selon $\theta_x$ et $\theta_y$. A côté de la figure 1, on a représenté trois axes orthogonaux ox, oy et oz partant du point d'inertie o du mobile afin de figurer les cinq degrés de liberté à contrôler : trois translations selon ox, oy et oz et les deux rotations $\theta_x$ et $\theta_y$ respectivement autour de l'axe ox et l'axe oy. Le sixième degré de liberté : la rotation autour de l'axe oz étant laissée libre.

La figure 2 est une variante de la figure 1.

La figure 3 représente un palier magnétique selon l'invention constituant un centreur stable angulairement, et dans lequel la position selon l'axe oz est fixée mécaniquement, donc un système permettant d'assurer à lui seul une sustentation complète.

La figure 4 est une variante de la figure 3 dans laquelle la position selon l'axe oz est contrôlée de manière active par une butée magnétique active.

La figure 5 représente une pompe turbomoléculaire à ailettes suspendue magnétiquement par un palier magnétique conforme à celui de la figure 4.

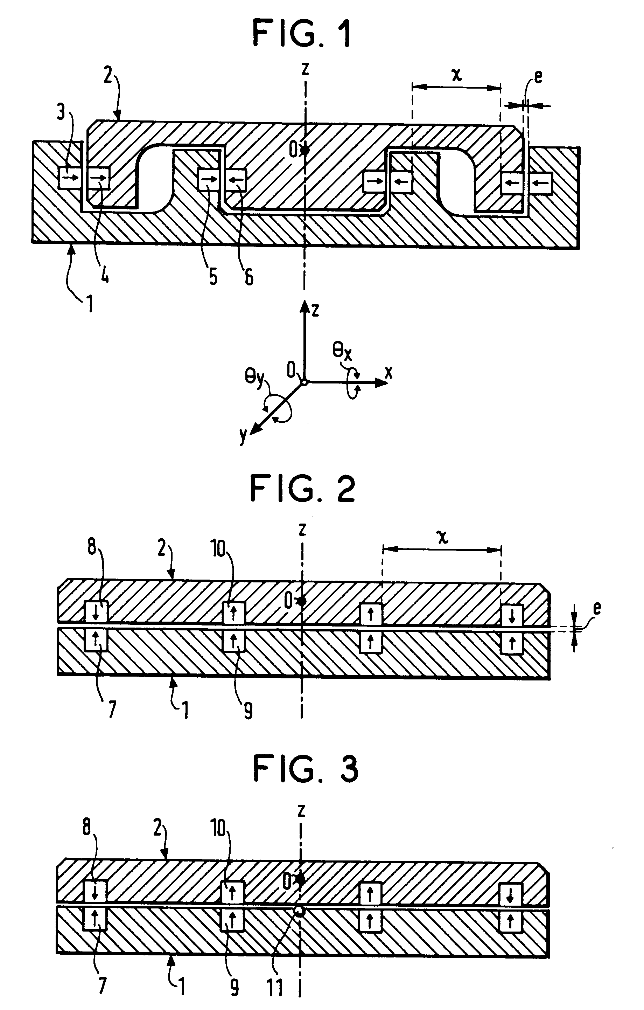

En se référant à la figure 1, on voit un palier magnétique comportant une partie fixe 1, de révolution, d'axe z et une partie mobile 2, de révolution. Son centre d'inertie est c. Ce palier comprend une butée magnétique passive composée de deux bagues aimantées 3 et 4, montées en attraction. La bague 3 est liée à la partie fixe 1 et la bague 4 est liée à la partie mobile 2. Coaxialement à cette butée passive 3-4 est situé un centreur magnétique passif composé de deux bagues aimantées 5 et 6 montées en répulsion. La bague 5 est liée à la partie fixe 1 et la bague 6 est liée à la partie mobile 2. Ce centreur passif 5-6 est coaxial et intérieur à la butée passive 3-4.

La polarisation des bagues aimantées est figurée par des flèches. Dans cette figure 1, l'aimantation des bagues est radiale. Elle pourrait tout aussi bien être axiale. Cependant dans cette figure, la butée 3-4 est en attraction et le centreur 5-6 en répulsion. Dans cette figure, le centreur 5-6 et la butée 3-4 sont dans le même plan, ces deux éléments, centreur et butée, pourraient être légèrement décalés axialement selon l'axe z.

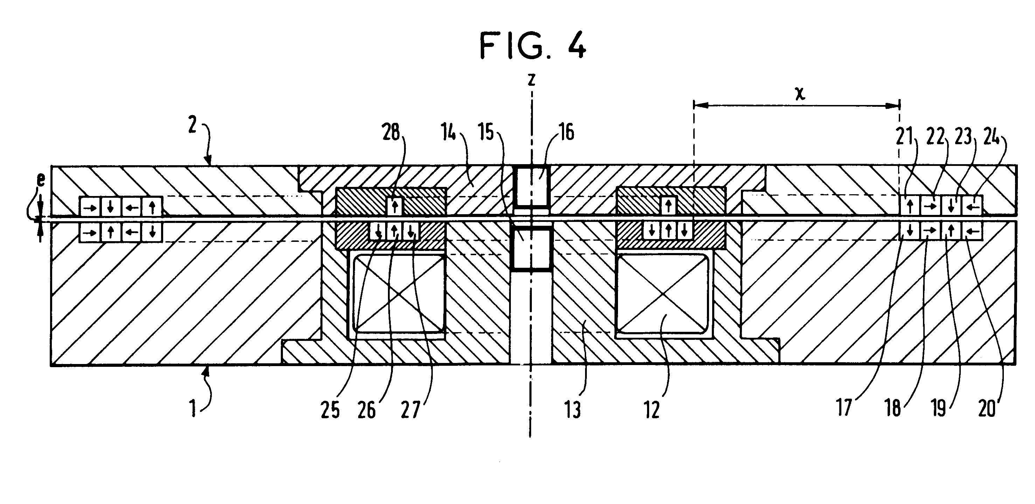

Enfin, au lieu d'avoir une bague aimantée unique pour chaque partie de chaque élément : centreur ou butée, chaque partie de chaque élément pourrait être constituée par l'association de plusieurs bagues aimantées. C'est le cas de la figure 4 décrite plus loin.

Le centreur 5-6 est défini par son rayon moyen $R_{mc}$, son rayon externe $R_{ec}$ sa raideur radiale $k_{rc}$ et sa raideur axiale $k_{ac}$

De même, la butée 3-4 est définie par son rayon moyen $R_{mb}$, son rayon interne $R_{ib}$, sa raideur radiale $k_{rb}$ et sa raideur axiale $k_{ab}$.

Un entrefer e sépare l'élément fixe et l'élément mobile de la butée et du centreur.

Ces différents paramètres sont choisis de façon à ce que le palier, constitué par l'association de la butée élémentaire 3-4 et du centreur élémentaire 5-6 constitue un centreur magnétique passif stable angulairement, c'est-à-dire constitue un centrage du centre d'inertie o de la partie mobile 2 sur l'axe z, tout en assurant la stabilité vis-à-vis des rotations $\theta_x$ et $\theta_y$.

On assure ainsi le contrôle de quatre degrés de liberté : les translations selon ox et oy et les rotations $\theta_x$ et $\theta_y$.

Les conditions que doivent remplir les paramètres ci-dessus, pour arriver à ce résultat, sont les suivantes :

1/ $|k_{rc}| > |k_{rb}|$

2/ $R_{mb} > R_{mc} \sqrt{\dfrac{|kac|}{|kab|}}$

3) $R_{ib} - R_{ec} = x \geq 3e$

La figure 2 est une variante dans laquelle la butée est une butée en répulsion et comprend une bague aimantée 7 liée à la partie fixe 1 et une bague aimantée 8 liée à la partie mobile 2. Ces bagues sont ici aimantées axialement, elles pourraient bien entendu être aimantées radialement. Le centreur est ici un centreur en attraction et il comprend une bague aimantée 9 liée à la partie fixe 1 et une bague aimantée 10 liée à la partie mobile 2. Comme pour la butée, ces bagues aimantées axialement pourraient être aimantées radialement.

De même, comme dans le cas précédent, le centreur 9-10 pourrait être faiblement décalé axialement par rapport à la butée 7-8.

Pour que le palier constitue un centreur stable angulairement, il faut que les paramètres ci-dessus cités pour la figure 1 remplissent les deux mêmes conditions.

Les paliers représentés figures 1 et 2 constituent donc chacun un centreur stable angulairement. Cependant ces paliers sont instables vis-à-vis d'une translation selon l'axe z.

La figure 3 représente un palier semblable à celui de la figure 2, mais dans lequel la position de la partie mobile 2 est fixée axialement par le moyen d'une butée mécanique, ici une bille 11.

La figure 4 représente un autre exemple d'un palier selon l'invention dont le contrôle de la position de la partie mobile 2 vis-à-vis d'une translation selon l'axe z est effectué à l'aide d'une butée axiale active comprenant un électro-aimant avec sa bobine 12 et son circuit magnétique 13 sur la partie fixe, et 14 sur la partie mobile. Un capteur de position 15-16 permet, de façon classique, par le moyen d'un circuit d'asservissement, connu en soi, d'alimenter électriquement la bobine 12 de l'électro-aimant. Dans ce palier, la butée magnétique passive fonctionne en répulsion et comporte une association de quatre bagues aimantées 17, 18, 19 et 20 sur la partie fixe 1 et de quatre bagues aimantées 21, 22, 23 et 24 sur la partie mobile 2. Le centreur magnétique passif, situé coaxialement, à l'intérieur de la butée passive, fonctionne en centreur attractif et comporte trois bagues aimantées 25, 26 et 27 sur la partie fixe et une seule bague aimantée 28 sur la partie mobile 2.

Ainsi, un tel palier est, comme on le voit, très simple et permet d'assurer la suspension complète d'un corps solide mobile en rotation autour de l'axe z avec un seul canal d'asservissement pour assurer de manière active le positionnement de la partie mobile 2 le long de l'axe z.

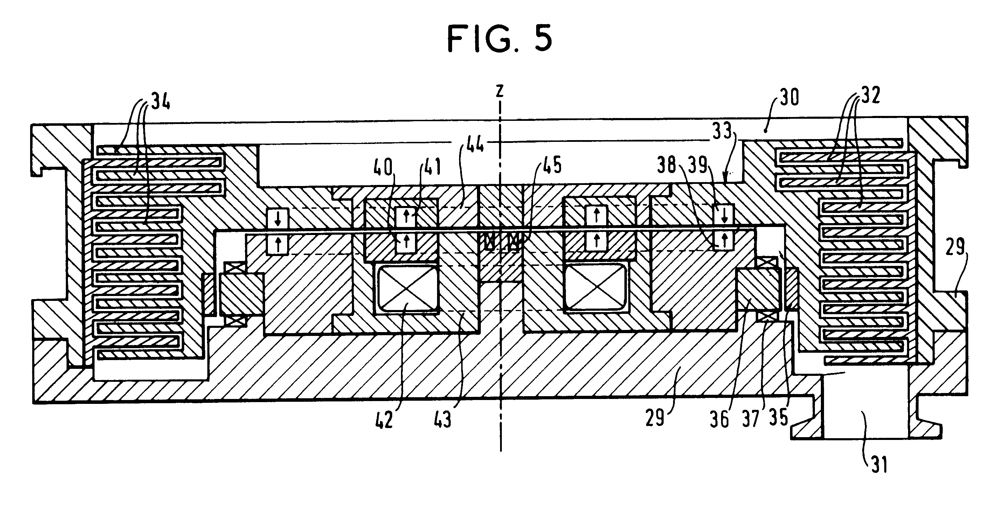

La figure 5 montre un exemple d'un ensemble rotorique tournant dans un stator et suspendu magnétiquement par le moyen d'un palier conforme à l'invention, et dans lequel le positionnement le long de l'axe z de rotation est assuré activement par une butée axiale active.

Il s'agit ici d'une pompe turbomoléculaire comportant un stator 29 comportant une entrée d'aspiration 30, une sortie de refoulement 31 et des ailettes statoriques 32 et un rotor 33 équipé d'ailettes rotoriques 34. Le rotor est entraîné en rotation par un moteur électrique comportant une partie rotorique 35 liée au rotor 33 et une partie statorique 36, avec des enroulements 37, liée au stator 29. La suspension est assurée magnétiquement, conformément au palier de l'invention, par une butée magnétique passive comportant une bague aimantée 38 liée au stator 29 et une bague aimantée 39 liée au rotor 33 et par un centreur magnétique passif coaxial et à l'intérieur de la butée, comprenant une bague aimantée 40 liée au stator 29 et une bague aimantée 41 liée au rotor 33. La butée 38-39 fonctionne en répulsion et le centreur 40-41 en attraction. Le positionnement selon l'axe z est contrôlé par une butée axiale active comportant un électro-aimant avec sa bobine 42 et un circuit magnétique 43 sur le stator, et 44 sur le rotor. Un capteur de position 45, par l'intermédiaire d'un circuit d'asservissement, non représenté, commande le courant de la bobine 42 compte tenu du jeu de consigne entre le rotor et le stator.

## Revendications

**1/** Palier magnétique permettant d'assurer la rotation d'un corps solide autour d'un axe fixe z, comportant une partie fixe (1), de révolution, et une partie mobile (2), de révolution, et comprenant une butée magnétique passive comportant un élément fixe (3, 7) lié à ladite partie fixe (1) et un élément mobile (4, 8) lié à ladite partie mobile (2), caractérisé en ce qu'il comprend en outre un centreur magnétique passif coaxial à ladite butée passive (3-4 ; 7-8) et comportant un élément fixe (5, 9) lié à ladite partie fixe (1) et un élément mobile (6, 10) lié à ladite partie mobile (2), ladite butée passive (3-4 ; 7-8) entourant extérieurement ledit centreur passif (5-6 ; 9-10), ladite butée passive ayant une raideur axiale $k_{ab}$, une raideur radiale $k_{rb}$, un rayon moyen $R_{mb}$ et un rayon interne $R_{Ib}$ et ledit centreur passif ayant une raideur axiale $k_{ac}$, une raideur radiale $k_{rc}$, un rayon moyen $R_{mc}$ et un rayon externe $R_{ec}$, un entrefer e séparant l'élément fixe et l'élément mobile de ladite butée et dudit centreur, ces différents paramètres étant choisis de façon à satisfaire simultanément les trois relations suivantes :

$$|k_{rc}| > |k_{rb}|$$
$$R_{mb} > R_{mc} \sqrt{\frac{|kac|}{|kab|}}$$
$$\text{et } R_{Ib} - R_{ec} \cong 3e.$$

**2/** Palier magnétique selon la revendication 1, caractérisé en ce que ladite butée passive (3-4 ; 7-8) est du type dans lequel l'élément fixe et l'élément mobile de la butée comprennent chacun au moins une bague aimantée.

**3/** Palier magnétique selon l'une des revendications 1 ou 2, caractérisé en ce que ledit centreur passif (5-6 ; 9-10) est du type dans lequel l'élément fixe et l'élément mobile du centreur comprennent chacun au moins une bague aimantée.

**4/** Palier magnétique selon l'une des revendications 1 à 3, caractérisé en ce qu'il comporte en outre un moyen pour le positionnement axial selon l'axe fixe z de ladite partie mobile (2).

**5/** Palier magnétique selon la revendication 4, caractérisé en ce que ledit moyen est une butée axiale active (12 à 16).

**6/** Palier magnétique selon la revendication 4, caractérisé en ce que ledit moyen est une butée mécanique (11).

**EP 0 664 410 A1**

**7/** Ensemble comportant une partie rotorique de révolution (33) et une partie statorique fixe (29) et comprenant des moyens d'entraînement en rotation (35, 36, 37) de la partie rotorique (33) par rapport à. la partie statorique (29), caractérisé en ce que la sustentation de la partie rotorique par rapport à la partie statorique est effectuée par un palier magnétique selon l'une des revendications 4 à 6, la partie rotorique étant solidaire de ladite partie mobile dudit palier et la partie statorique étant solidaire de ladite partie fixe dudit palier.

**8/** Ensemble selon la revendication 7, caractérisé en ce que cet ensemble est une pompe turbomoléculaire.

# FIG. 1

# FIG. 2

# FIG. 3

FIG. 4

# FIG. 5

EP 0 664 410 A1

**Office européen**

**des brevets**

# RAPPORT DE RECHERCHE EUROPEENNE

Numero de la demande

EP 95 40 0073

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PATENT ABSTRACTS OF JAPAN vol. 9 no. 235 (M-415) [1958] ,21 Septembre 1985 & JP-A-60 091011 (RIGAKU KEISOKU) 22 Mai 1985, * abrégé; figures * --- | 1-4,6 | F16C39/06 F04D19/04 |
| A | DE-A-37 13 534 (MITSUBISHI DENKI) * abrégé; revendications 1-6,8; figures 1-4 * * colonne 4, ligne 54 - colonne 5, ligne 29 * * colonne 5, ligne 58 - colonne 8, ligne 41 * --- | 1-8 | |
| A | FR-A-2 512 507 (DEINI SEIKOSHA) * le document en entier * --- | 1,5,7,8 | |
| A | EP-A-0 445 691 (ALCATEL CIT) * le document en entier * ----- | 1-4,7,8 | |
| | | | **DOMAINES TECHNIQUES RECHERCHES (Int.Cl.6)** |
| | | | F16C F04D H02K |

Le présent rapport a été établi pour toutes les revendications

| Lieu de la recherche | Date d'achèvement de la recherche | Examinateur |
|---|---|---|
| LA HAYE | 25 Avril 1995 | Westland, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.....................................................................

& : membre de la même famille, document correspondant

EPO FORM 1503 03.82 (P04C02)